# EUROPÄISCHE PATENTANMELDUNG

(11) **EP 2 194 288 A2**
(43) Veröffentlichungstag der Anmeldung: **09.06.2010**
(21) Anmeldenummer: 10002754.9
(22) Anmeldetag: 12.01.2006
(51) Int. Cl.: F16D 65/097, F16D 65/092, B62L 1/00

(54) **Bremszange und Bremsbelag für eine Bremszange**

(30) Priorität: 12.01.2005 DE 102005001482
(62) Teilanmeldung aus: 06706212.5
(71) Anmelder: Gustav Magenwirth GmbH & Co. KG, 72574 Bad Urach (DE)
(72) Erfinder: Ruopp, Michael, 89180 Berghülen (DE)
(74) Vertreter: Friese, Martin

(57) **Zusammenfassung**

Die Erfindung betrifft eine Bremszange für eine Scheibenbremse, insbesondere für Motorräder und/oder Fahrräder, mit einem Gehäuse (30) zur Aufnahme von Bremsbelägen (40), die beim Bremsen an eine Bremsscheibe angreifen, wobei das Gehäuse eine Widerlagerfläche (33) zur Anlage der Bremsbeläge beim Bremsen in Vorwärtsfahrtrichtung und eine der Widerlagerfläche (33) gegenüberliegende Montageöffnung (29) aufweist, durch die die Bremsbeläge (40) in das Gehäuse (30) einsetzbar sind, wobei das Gehäuse (30) eine Aussparung (139) und/oder ein Sichtfenster (139A, 139B) aufweist, in die bzw. das ein Vorsprung (49, 49A, 49B) von einem in das Gehäuse (30) eingesetzten Bremsbelag (40) eingreift.

## Beschreibung

Die vorliegende Erfindung betrifft eine Bremszange gemäß dem Oberbegriff von Anspruch 1 oder Anspruch 25.

Die deutsche Offenlegungsschrift DE 148 356 A offenbart eine Bremszange gemäß dem Oberbegriff von Anspruch 1. Bei der bekannten Bremszange weist der Bremsbelag einen im wesentlichen kreisförmigen Abschnitt auf, der sich beim Bremsen an einer kreisabschnittsförmig ausgebildeten Widerlagerfläche abstützt, die gleichzeitig den Bremsbelag als Bremsbelagabstützvorrichtung nach unten abstützt. An der der Widerlagerfläche gegenüberliegenden Seite weist der Bremsbelag einen Arm mit einer Aufnahmeöffnung auf, in der ein Bolzen zur Sicherung des Bremsbelags in dem Gehäuse angeordnet ist. Die bekannte Bremszange hat den Nachteil, dass infolge der beim Bremsen entstehenden Wärmeausdehnung des Bremsbelags der Bremsbelag zwischen dem Bolzen und der Widerlagerfläche geklemmt wird, derart, dass eine erhebliche Gefahr des Festsitzens der Bremsbeläge und des damit verbundenen Blockierens der Bremse entsteht.

Die WO 2004/076885 A1 offenbart ebenfalls eine Bremszange gemäß dem Oberbegriff von Anspruch 1. Die Aufnahmeöffnung des Bremsbelags, in die ein Bolzen zur Sicherung des Bremsbelags in das Gehäuse angeordnet wird, weist ein Langloch auf, um die Wärmeausdehnung des Bremsbelags beim Bremsen auszugleichen. Diese bekannte Bremszange hat den Nachteil, dass der Bremsbelag beim Fahren in Schwingungen geraten und vibrieren kann, was wegen der damit verbundenen Geräuschentwicklung unerwünscht und störend ist.

Der Erfindung liegt daher die Aufgabe zugrunde, eine Bremszange anzugeben, bei der die Bremsbeläge derart anordbar sind, dass einerseits beim Bremsvorgang die Gefahr eines unerwünschten Blockierens, als auch andererseits beim Fahren die Gefahr des Vibrierens der Bremse wesentlich verringert ist.

Diese Aufgabe der Erfindung wird mit einer Bremszange gemäß den Merkmalen von Anspruch 1 gelöst. Vorteilhafte Ausgestaltungen der Erfindung sind in den abhängigen Ansprüchen angegeben.

Gemäß einer Ausführung der Erfindung umfaßt die Bremszange für eine Scheibenbremse, insbesondere für Motorräder und/oder Fahrräder, ein Gehäuse zur Aufnahme von Bremsbelägen, die beim Bremsen an eine Bremsscheibe angreifen, wobei das Gehäuse eine Widerlagerfläche zur Anlage der Bremsbeläge beim Bremsen in Vorwärtsfahrtrichtung und eine der Widerlagerfläche gegenüberliegende Montageöffnung aufweist, durch die die Bremsbeläge in das Gehäuse einsetzbar sind, eine Bremsbelagsicherungsvorrichtung zur Sicherung der Bremsbeläge in dem Gehäuse an der der Widerlagerfläche gegenüberliegenden Seite, eine Bremsbelagabstützeinrichtung zur Abstützung der Bremsbeläge zwischen der Widerlagerfläche und der Bremsbelagsicherungsvorrichtung, und eine Vorspanneinrichtung, die derart ausgebildet ist, dass sie einen in das Gehäuse eingesetzten Bremsbelag in eine definierte Position vorspannt.

Diese Bremszange hat den Vorteil, dass die Bremsbeläge in dem Gehäuse mit der Bremsbelagsicherungsvorrichtung mit Spiel zum Ausgleich der beim Bremsen auftretenden Wärmeausdehnung angeordnet werden können, und gleichzeitig durch die Vorspannvorrichtung gewährleistet ist, dass die Bremsbeläge immer in einer definierten Position angeordnet sind, d.h. vorzugsweise an der Widerlagerfläche anliegend, derart, dass keine unerwünschten Schwingungen und damit verbundenen Geräusche beim Fahren entstehen. Es ist klar, dass die Vorspannkraft der Vorspannvorrichtung derart gewählt werden soll, dass einerseits der Bremsbelag den beim Fahren auftretenden Stößen nicht von der Widerlagerfläche entfernt wird und andererseits nicht so groß ist, dass durch die zwischen der Widerlagerfläche und dem Bremsbelag eine Gefahr des Festsetzens des Bremsbelags entsteht. Dazu ist die Vorspannvorrichtung derart ausgebildet, dass sie einen in das Gehäuse eingesetzten Bremsbelag in eine definierte Position vorspannt.

Vorzugsweise wird durch die Vorspannvorrichtung ein in die Bremszange eingesetzter Bremsbelag gegen die Widerlagerfläche und die Bremsbelagabstützvorrichtung vorgespannt. Dazu kann beispielsweise die Vorspannvorrichtung oberhalb des Bremsbelags angeordnet sein und eine Kraft auf dem Bremsbelag in Richtung der Bremsbelagabstützvorrichtung ausüben. Der Bremsbelag und die Bremsbelagabstützvorrichtung sind dabei vorzugsweise derart ausgebildet, dass der Bremsbelag in Richtung der Widerlagerfläche vorgespannt wird. Vorteilhafterweise umfaßt die Vorspannvorrichtung gemäß einer Ausführung der Erfindung eine Federvorrichtung, die an der Oberseite von einem in das Gehäuse eingesetzten Bremsbelag angreift. Die Vorspannvorrichtung kann beispielsweise eine Blattfeder umfassen bzw. vorzugsweise mehrere Blattfedern umfassen, die jeweils an ein in das Gehäuse eingesetzten Bremsbelag angreifen.

Erfindungsgemäß kann die Vorspanneinrichtung derart ausgebildet sein, dass sie einen in die Bremszange eingesetzten Bremsbelag gegen die Widerlagerfläche und die Bremsbelagabstützeinrichtung vorspannt.

Erfindungsgemäß kann die Vorspanneinrichtung derart ausgebildet sein, dass sie auf einen in die Bremszange eingesetzten Bremsbelag eine Kraft ausübt, die im wesentlichen in Richtung der Bremsbelagabstützeinrichtung gerichtet ist. Vorzugsweise kann dazu die Vorspanneinrichtung eine Federeinrichtung umfassen, die an der Oberseite von einem in das Gehäuse eingesetzten Bremsbelag angreift. Vorteilhafterweise kann dabei die Vorspanneinrichtung eine oder mehrere Blattfedern umfassen, die an der Oberseite der in das Gehäuse eingesetzten Bremsbeläge angreifen. Diese Ausführungen der Erfindung haben den Vorteil, dass bei der Montage der Bremsbeläge die Bremsbeläge mit einem Geräusch hinter der Bremsbelagsicherungseinrichtung einschnappen oder einrasten und dem Benutzer ein deutliches Signal über die richtige Positionierung der Bremsbeläge vermitteln.

Vorteilhafterweise kann die Vorspanneinrichtung in Umfangsrichtung einer in dem Gehäuse aufgenommenen Bremsscheibe ungefähr in der Mitte zwischen der Widerlagerfläche und der Bremsbelagsicherungsvorrichtung angeordnet sein.

Vorteilhafterweise kann die Bremsbelagabstützeinrichtung derart ausgebildet sein, dass ein in das Gehäuse eingesetzter Bremsbelag durch die durch die Vorspanneinrichtung auf den Bremsbelag ausgeübte Kraft in Richtung der Widerlagerfläche vorgespannt wird.

Gemäß einer alternativen Ausgestaltung der Erfindung kann die Vorspanneinrichtung derart ausgebildet sein, dass sie auf einen in die Bremszange eingesetzten Bremsbelag eine Kraft ausübt, die im wesentlichen in Richtung der Widerlagerfläche gerichtet ist. Dabei kann die Vorspanneinrichtung eine Federeinrichtung umfassen, die auf der der Widerlagerfläche gegenüberliegenden Seite eines in die Bremszange eingesetzten Bremsbelags an dem Bremsbelag angreift. Vorteilhafterweise kann dabei die Widerlagerfläche derart geneigt sein, dass ein gegen die Widerlagerfläche vorgespannter Bremsbelag gegen die Bremsbelagabstützeinrichtung vorgespannt wird.

Gemäß einer alternativen Ausgestaltung der Erfindung kann die Vorspanneinrichtung derart ausgebildet sein, dass sie auf einen in die Bremszange eingesetzten Bremsbelag eine Kraft ausübt, die eine erste Kraftkomponente, die im wesentlichen in Richtung der Bremsbelagabstützeinrichtung gerichtet ist, und eine zweite Kraftkomponente aufweist, die im wesentlichen in Richtung der Widerlagerfläche gerichtet ist. Dabei kann vorteilhafterweise die erste Kraftkomponente ungefähr das 0,1 bis ungefähr das 10-fache, vorzugsweise ungefähr das 0,5 bis ungefähr das 5-fache und vorzugsweise ungefähr das 2-fache der zweiten Kraftkomponente betragen.

Bei den genannten Ausführungen kann die Vorspanneinrichtung vorteilhafterweise derart ausgebildet sein, dass sie bei Betätigung der Bremse deaktiviert wird. Das hat den Vorteil, dass insbesondere beim ersten Lösen der Bremse, wenn die Bremsbeläge die Bremsscheibe freigeben, die Haftreibung zwischen dem Bremsbelag und der Widerlagerfläche bzw. der Bremsbelagabstützvorrichtung geringer ist und ein Verklemmen der Bremsbeläge vermieden wird. Vorteilhafterweise kann dabei die Bremszange eine hydraulische Bremsbetätigung umfassen, und die Vorspanneinrichtung derart ausgebildet sein, dass sie durch den bei der Betätigung der Bremse aufgebauten hydraulischen Druck, der auch noch unmittelbar nach dem Lösen bzw. vorzugsweise noch für kurze Zeit erzeugt bzw. gespeichert wird, deaktiviert wird.

Erfindungsgemäß kann die Bremsbelagabstützeinrichtung mehrere Bolzen umfassen, die jeweils einen in das Gehäuse eingesetzten Bremsbelag abstützen. Alternativ oder zusätzlich kann die Bremsbelagabstützeinrichtung mehrere Vorsprünge umfassen, die jeweils einen in das Gehäuse eingesetzten Bremsbelag abstützen. Dabei können die Vorsprünge einstückig mit dem Gehäuse ausgebildet sein.

Erfindungsgemäß kann die Bremsbelagabstützeinrichtung in Umfangsrichtung einer in dem Gehäuse aufgenommenen Bremsscheibe ungefähr in der Mitte zwischen der Widerlagerfläche und der Bremsbelagsicherungsvorrichtung angeordnet sein. Erfindungsgemäß können vorzugsweise dabei die Bremsbelagabstützeinrichtung und die Vorspanneinrichtung in Umfangsrichtung einer in dem Gehäuse aufgenommenen Bremsscheibe im wesentlichen ungefähr auf der gleichen Höhe angeordnet sein.

Erfindungsgemäß kann das Gehäuse ein Schmiedeteil sein, das vorzugsweise einteilig ausgebildet ist. Die Ausbildung als Schmiedeteil hat den Vorteil, dass die Bremszange bei gleicher Festigkeit kleiner gebaut werden kann. Das ist insbesondere im Moto-Cross-Bereich wichtig, weil es dann möglich ist, die Bremszange in einem Winkel von ungefähr 15 Grad nach oben anzuordnen und an zwei Anschraubaugen anzuordnen, die die Bremszange in Umfangsrichtung der Bremsscheibe vollständig einschließen. Das hat den Vorteil, dass eine optimale Verwindungssteifigkeit gegeben ist, wobei gleichzeitig keine Störkontur unterhalb des Gabelfusses erzeugt wird.

Alternativ kann das Gehäuse ein Fräs- und/oder Gußteil sein, das einteilig, zweiteilig oder mehrteilig ausgebildet ist.

Alternativ oder zusätzlich kann das Gehäuse eine Aussparung aufweisen, in die ein Vorsprung von einem in das Gehäuse eingesetzten Bremsbelag eingreift.

Alternativ oder zusätzlich kann das Gehäuse zumindest ein Sichtfenster aufweisen, in das ein Vorsprung von einem in das Gehäuse eingesetzten Bremsbelag eingreift, wobei das zumindest eine Sichtfenster vorzugsweise derart ausgebildet ist, dass der Verschleiß der Reibbeläge eines in das Gehäuse eingesetzten Bremsbelags beobachtbar ist.

Bekannte Bremsbelagsicherungsvorrichtungen umfassen Bolzen, die in das Gehäuse eingeschraubt werden. Diese Bremsbelagsicherungsvorrichtungen haben den Nachteil, dass sie aufwendig in der Montage sind und sich lösen können. Außerdem sind sie bei stark verschmutzten Bremszangen schwer zu lösen. Weiterhin ist es bekannt, Bolzen zur Sicherung des Bremsbelags in das Gehäuse durch Aufnahmeöffnungen der Bremsbeläge zu stecken und mit einem Federsplint zu sichern. Als zusätzliche Sicherung ist es bekannt, zusätzlich zu den in Nuten angeordneten Federsplinten ein Federblech vorzusehen, das über einen Abschnitt geringeren Durchmessers in der Mitte des Bolzens geschoben wird. Diese Lösung hat den Nachteil, dass viele Teile vorgesehen sind, was die Montage aufwendig macht. Außerdem können die Teile leicht verloren gehen. Der Erfindung liegt daher auch die Aufgabe zugrunde, eine Bremszange anzugeben, die eine Bremsbelagssicherungsvorrichtung aufweist, die leicht bedienbar ist und gleichzeitig eine sichere Sicherung des Bremsbelags in dem Gehäuse der Bremszange gewährleistet.

Diese Aufgabe der Erfindung wird mit den Merkmalen von Anspruch 25 gelöst. Vorteilhafte Ausgestaltungen der Erfindung sind in den abhängigen Ansprüchen angegeben.

Gemäß einer Ausführung der Erfindung umfaßt die Bremszange für eine Scheibenbremse, insbesondere für Motorräder und/oder Fahrräder, ein Gehäuse zur Aufnahme von Bremsbelägen, die beim Bremsen an eine Bremsscheibe angreifen, wobei das Gehäuse eine Widerlagerfläche zur Anlage der Bremsbeläge beim Bremsen in Vorwärtsfahrtrichtung aufweist, und eine Bremsbelagsicherungsvorrichtung mit einem Bolzen zur Sicherung der Bremsbeläge in dem Gehäuse an der der Widerlagerfläche gegenüberliegenden Seite, wobei die Bremsbelagsicherungsvorrichtung desweiteren einen Bügel umfaßt, der den Bolzen gegen ein Herausrutschen sichert und einen Abschnitt des Gehäuses zur Sicherung des Bügels hintergreift.

Diese Ausführung der Erfindung hat den Vorteil, dass der Bügel eine Doppelfunktion aufweist. Zum Lösen der Bremsbelagssicherungsvorrichtung sind Kräfte erforderlich, die in unterschiedliche Richtungen wirken. Dadurch ist bei einer leichten Montage eine sichere Sicherung der Bremsbeläge an dem Gehäuse gewährleistet.

Erfindungsgemäß kann der Bolzen an einem Ende eine Nut aufweisen, in die der Bügel eingreift. Dabei kann der Bügel einen Armabschnitt aufweisen, der einen Bogenabschnitt aufweist, der in die Nut des Bolzens eingreift. Vorzugsweise kann der Armabschnitt des Bügels entsprechend einem Federsplint ausgebildet sein.

Gemäß einer Ausführung der Erfindung kann der Bolzen an beiden Enden jeweils eine Nut aufweisen, und der Bügel zwei, vorzugsweise baugleiche, Armabschnitte aufweisen, die jeweils einen Bogenabschnitt aufweisen, der in die entsprechende Nut des Bolzens eingreift.

Gemäß einer weiteren Ausführung der Erfindung kann der Bolzen an einem Ende eine Nut und an seinem anderen Ende eine Bohrung aufweisen, und der Bügel einen Armabschnitt, der einen Bogenabschnitt aufweist, der in die Nut des Bolzens eingreift, und einen Eingreifabschnitt aufweisen, der in die Bohrung des Bügels eingreift. Das hat den Vorteil, dass der Bügel leichter montiert werden kann.

Vorteilhafterweise kann das Gehäuse eine Nocke umfassen, hinter die der Bügel zur Sicherung des Bügels greift.

Erfindungsgemäß kann die Bremszange auch Kombinationen der genannten Ausführungen umfassen.

Die Erfindung betrifft auch einen Bremsbelag für eine Bremszange nach einem der vorhergehenden erfindungsgemäßen Ausführungen mit einer Aussparung zur Abstützung an der Bremsbelagabstützvorrichtung.

Bei einem erfindungsgemäßen Bremsbelag kann die Aussparung derart ausgebildet sein, dass der in das Gehäuse eingesetzte Bremsbelag mittels der durch eine Vorspanneinrichtung auf den Bremsbelag ausgeübte Kraft in Richtung der Widerlagerfläche vorgespannt wird.

Dabei kann die Aussparung halbrundförmig ausgebildet sein. Alternativ oder zusätzlich kann die Aussparung eine Abschrägung aufweisen, die derart ausgebildet ist, dass der in das Gehäuse eingesetzte Bremsbelag mittels der durch die Vorspanneinrichtung auf den Bremsbelag ausgeübten Kraft in Richtung der Widerlagerfläche vorgespannt wird. Dabei kann die Abschrägung geradlinig ausgebildet sein und einen Winkel von ungefähr 15 bis ungefähr 45 Grad, vorzugsweise ungefähr 30 Grad zur Umfangsrichtung der Bremsscheibe aufweisen. Alternativ oder zusätzlich kann die Abschrägung krummlinig ausgebildet sein und eine Neigung in einem Winkelbereich zwischen ungefähr 15 bis ungefähr 45, Grad, vorzugsweise bei ungefähr 30 Grad zur Umfangsrichtung der Bremsscheibe aufweisen.

Alternativ oder zusätzlich kann der Bremsbelag einen Vorsprung zum Eingriff in eine Aussparung in dem Gehäuse einer Bremszange aufweisen. Dabei kann der Vorsprung an einer Seite des Bremsbelags angeordnet sein. Alternativ oder zusätzlich kann der Vorsprung im wesentlichen mittig vorzugsweise im oberen Bereich des Bremsbelags angeordnet sein.

Die Erfindung betrifft auch eine Bremszange gemäß den vorstehenden Ausführungen in Kombination mit den erfindungsgemäßen Bremsbelägen gemäß den vorstehenden Ausführungen.

Die Erfindung betrifft auch das Gehäuse einer Bremszange gemäß den vorstehenden Ausführungen.

Die erfindungsgemäßen Ausführungen der Bremszange können zusätzlich auch ein Gehäuse, in dem ein Scheibenraum zur Aufnahme einer Bremsscheibe und ein Bremszylinder zur Aufnahme eines Bremskolbens ausgebildet ist, der mit dem Scheibenraum in Verbindung steht und an seiner dem Scheibenraum gegenüberliegenden Seite eine Montageöffnung aufweist, durch die der Bremskolben in den Bremszylinder einsetzbar ist, ein Verschlußelement zum Verschließen der Montageöffnung nach dem Einsetzen des Bremskolbens in den Bremszylinder, und ein Sicherungselement zum Sichern des Verschlußelements in der Montageöffnung gegenüber Kräften in Richtung der Hauptachse des Bremszylinders umfassen, wobei das Gehäuse und das Verschlußelement das Sicherungselement einschließen.

Diese Weiterbildung der erfindungsgemäßen Bremszangen hat den Vorteil, dass die Montage des Verschlußelements gegenüber dem Stand der Technik wesentlich vereinfacht und damit kostengünstiger ist, weil kein Eindrehen und keine Drehmonentüberwachung beim Eindrehen des Verschlußelements notwendig ist. Außerdem besteht der Vorteil, dass sich das Verschlußelement nicht mehr infolge der Belastungen durch die Druckwechsel im System selber lösen kann. Ein weiterer Vorteil besteht darin, dass das Verschlußelement nicht mehr entfernt und die Bremszange nicht versehentlich beschädigt werden kann.

Gemäß einer Ausführung der Erfindung kann das Verschlusselement in dem Gehäuse mit einer Presspassung angeordnet sein. Eine Presspassung hält in der Regel einem Druck von über 40 bar stand. 40 bar ist auch ein üblicher Betriebsdruck der Bremse.
Bei einer Vollbremsung treten Drücke von bis zu 80 bar auf. Beim Testen werden Drücke von bis zu 250 bar angelegt. Daher ist bei den Ausführungen der Erfindung mit dem Verschlusselement das Sicherungselement notwendig, um einen sicheren Verschluss der Montageöffnung zu gewährleistet. Wenn das Verschlusselement und das Gehäuse beispielsweise infolge einer unterschiedlichen Materialwahl unterschiedliche Wärmeausdehnungskoeffizienten aufweisen, ist das Sicherungselement ebenfalls erforderlich, um einen sicheren Verschluss der Montageöffnung zu gewährleisten.

Erfindungsgemäß kann das Sicherungselement elastisch ausgebildet sein. Dabei kann es vorzugsweise in das Verschlusselement integriert sein. Beispielsweise kann das Verschlusselement doppelwandig ausgebildet sein, wobei es vorzugsweise Rippen, Federelemente bzw. elastische Elemente aufweist, die geeignet zwischen der elastischen Aussenwandung und der Innenwandung angeordnet sind. Beispielsweise kann das Verschlusselement auch insgesamt elastisch ausgebildet sein. Alternativ oder zusätzlich können ein oder mehrere widerhakenförmige Elemente am Verschlusselement vorgesehen sein. Alternativ oder zusätzlich kann auch ein schirmförmiges bzw. schirmrandförmiges Element am Verschlusselement vorgesehen sein.

Gemäß einer bevorzugten Ausführung der Erfindung ist das Sicherungselement ein Sprengring. Durch diese Ausführung läßt sich ein besonders einfacher Aufbau erreichen. Die Montage ist ebenfalls sehr einfach, weil der Sprengring zur Sicherung des Verschlußelements nur an seinen Platz springen muß.

Vorzugsweise kann in der Montageöffnung eine Nut zur Aufnahme des Sicherungselements vorgesehen sein. Entsprechend kann das Verschlußelement eine Nut zur Aufnahme des Sicherungselements aufweisen.

Gemäß einer Ausführung der Erfindung kann in dem Gehäuse im Bereich der Montageöffnung eine Schulter zur Abstützung des Verschlußelements vorgesehen sein. Dabei kann zwischen der Schulter und dem Verschlußelement eine Dichtung vorgesehen werden. Auf diese Weise läßt sich die Abdichtung des Druckraums des Bremszylinders auf einfache und sichere Weise realisieren.

Gemäß einer Ausführung der Erfindung ist auf der der Montageöffnung gegenüberliegenden Seite des Scheibenraums ein weiterer Bremszylinder zur Aufnahme eines weiteren Bremskolbens vorgesehen, der zu dem anderen Bremszylinder koaxial angeordnet ist. Vorzugweise werden bei der Montage alle Bremskolben (und Dichtungen) durch die Montageöffnung eingesetzt, bevor die Montageöffnung durch das Verschlußelement verschlossen wird.

Aus Sicherheitsgründen ist es vorteilhaft, wenn das Verschlußelement und das Sicherungselement nach der Montage des Verschlußelements in dem Gehäuse nicht mehr entfernbar sind.

Gemäß einer bevorzugten Ausführung der Erfindung ist ein weiterer Bremszylinder zur Aufnahme eines weiteren Bremskolben vorgesehen, der neben dem anderen Bremszylinder angeordnet ist, wobei ein Verschlußelement und ein Sicherungselement gemäß der Erfindung vorgesehen sind.

Vorzugsweise weist die erfindungsgemäße Bremszange mehrere Paare, insbesondere vorzugsweise zwei Paare von Bremszylindern auf, wobei auf einer Seite der Bremszange für jedes Bremszylinderpaar jeweils ein Verschlußelement und Sicherungselement gemäß der Erfindung vorgesehen ist.

Vorteilhafterweise ist das Gehäuse der erfindungsgemäßen Bremszange ein Schmiedeteil. Das hat gegenüber Gehäusen aus Guß- oder Frästeilen den Vorteil, dass die Bremszange bei gleicher Festigkeit kleiner ausgebildet werden kann. Insbesondere kann eine hinreichende Festigkeit im Bereich der Montageöffnung zur Aufnahme des Sicherungselements (Sprengring) erzielt werden, um die beim Bremsen auftretenden Kräfte aufzunehmen.

Die Erfindung betrifft auch eine Kombination aus einer Bremszange und einem Gabelfuss.

Eine Kombination aus einer Bremszange und einem Gabelfuss ist beispielsweise aus der WO 2004/076270 A1 bekannt. Bei der bekannten Kombination weist das Gehäuse der Bremszange ein in der Mitte und ein an der Seite angeordnetes Anschraubauge auf. Die beiden Bremszylinder sind in Umfangsrichtung einer in dem Gehäuse teilweise angeordneten Bremsscheibe gesehen beidseits des mittig angeordneten Anschraubauges vorgesehen. Das hat den Nachteil, dass bei der Übertragung der beim Bremsen auftretenden Kräfte von der Bremszange auf Gabelfuss starke Verwindungskräfte wirken. Daher muß die Verbindung groß dimensioniert werden, was ein höheres Gewicht und einen größeren benötigten Bauraum bedingt.

Der Erfindung liegt daher auch die Aufgabe zugrunde, eine Kombination aus Bremszange und Gabelfuß anzugeben, die besonders kleinbauend und verwindungssteif ist.

Diese Aufgabe der Erfindung wird mit den Merkmalen von Anspruch 43 gelöst. Vorteilhafte Ausgestaltungen der Erfindung sind in den abhängigen Ansprüchen angegeben.

Gemäß einer Ausführung der Erfindung ist bei einer Kombination aus einer Bremszange mit einem Gabelfuss die Konstruktion derart, dass die Bremszange oberhalb der Unterkante des Gabelfusses angeordnet ist, und weist das Gehäuse der Bremszange einen oder mehrere Bremszylinder und mindestens zwei Anschraubaugen auf, die derart angeordnet sind, dass der oder die Bremszylinder in Umfangsrichtung einer in der Bremszange angeordneten Bremsscheibe gesehen zwischen den Anschraubaugen liegen.

Dadurch ergibt sich der Vorteil einer sehr hohen Verwindungssteifigkeit der Verbindung zwischen der Bremszange und dem Gabelfuß.

Vorteilhafterweise kann dabei die Bremszange die oben genannten Merkmale aufweisen.

Erfindungsgemäß kann die Bremszange in einem Winkel (α) relativ zu der Horizontalen nach oben verschwenkt an dem Gabelfuss angeordnet sein. Vorteilhafterweise beträgt der Winkel dabei ungefähr 0 bis ungefähr 45°, vorzugsweise ungefähr 10 bis ungefähr 30° und insbesondere vorzugsweise ungefähr 15°.

Erfindungsgemäß kann das Gehäuse der Bremszange ein Schmiede-, Fräs- und/oder Gußteil sein.

Erfindungsgemäß kann der Gabelfuß zwischen den Anschraubaugen einen Rand zur Aufnahme des Gehäuses der Bremszange aufweisen, wobei der Rand vorzugsweise im wesentlichen der Kontur des Gehäuses entspricht. Dadurch läßt sich eine noch bessere Verwindungssteifigkeit erreichen. Vorteilhafterweise kann dabei eine formschlüssige und/oder kraftschlüssige Verbindung zwischen dem Rand des Gabelfusses und der Kontur der Bremszange ausgebildet werden.

Erfindungsgemäß können das Gehäuse der Bremszange und der Gabelfuß derart ausgebildet sein, dass im zusammengebauten Zustand ein Flächenkontakt zwischen den sich gegenüberliegenden Flächen des Gehäuses und des Gabelfusses gegeben ist. Das hat den weiteren Vorteil, dass eine gute Wärmeableitung der beim Bremsen entstehenden Wärme von der Bremszange über den Gabelfuss auf die Gabel ermöglicht wird.

Die erfindungsgemäße Bremzange und die erfindungsgemäße Kombination sind insbesondere für Moto-Cross Motorräder vorteilhaft, weil dort ein begrenzter Bauraum vorhanden ist und die Bremszange möglichst nicht unterhalb des Gabelfusses angeordnet werden sollte, um einen Bodenkontakt zu vermeiden. Insbesondere sind die erfindungsgemäßen Ausgestaltungen für Bremsen mit Bremsscheiben vorteilhaft, die einen Durchmesser von weniger als 290 mm, insbesondere einen Durchmesser im Bereich von 200 bis 280 mm aufweisen, weil bei solchen Bremsen der Bauraum sehr begrenzt ist.

Im folgenden wird eine erfindungsgemäße Bremszange sowie erfindungsgemäße Bremsbeläge und eine erfindungsgemäße Kombination aus Bremszange und Gabelfuss anhand der in den Figuren gezeigten Ausführungsbeispiele der Erfindung genauer beschrieben.
- Fig. 1: zeigt einen Schnitt durch eine erfindungsgemäße Bremszange entlang der Linie I-I von Fig. 2.
- Fig. 1A: zeigt einen Schnitt durch eine weitere erfindungsgemäße Bremszange entlang der Linie IA-IA von Fig. 2A.
- Fig. 2: zeigt eine Vorderansicht der Bremszange von Fig. 1.
- Fig. 2A: zeigt eine Vorderansicht der Bremszange von Fig. 1A.
- Fig. 3: zeigt einen Schnitt durch die Bremszange von Fig. 1 entlang der Linie III-III von Fig. 1.
- Fig. 4: zeigt eine Hinteransicht der Bremszange von Fig. 1.
- Fig. 5: zeigt eine Seitenansicht der Bremszange von Fig. 1.
- Fig. 6: zeigt eine Ansicht der Bremszange von Fig. 1 von oben.
- Fig. 7: zeigt eine Ansicht der Bremszange von Fig. 1 in Kombination mit einem Gabelfuss von vorne (bezogen auf das Fahrzeug).
- Fig. 8: zeigt eine Ansicht der Kombination von Fig. 7 von Bremszange und Gabelfuss von der Seite.
- Fig. 9: zeigt eine Ansicht der Kombination von Fig. 7 von Bremszange und Gabelfuss von oben (bezogen auf das Fahrzeug).
- Fig. 10: zeigt eine Detailansicht des Bügels und des Bolzens der Bremsbelagsicherungsvorrichtung der Bremszange von Fig. 1 aus einer Richtung entsprechend Fig. 4.
- Fig. 11: zeigt eine Detailansicht des Bügels und des Bolzens der Bremsbelagbefestigungsvorrichtung der Bremszange von Fig. 1 aus einer Richtung entsprechend Fig. 5.
- Fig. 12: zeigt eine Detailansicht des Bügels und des Bolzens einer Bremsbelagbefestigungsvorrichtung gemäß einer erfindungsgemäßen Alternative.
- Fig. 13: zeigt eine Teilansicht des Abstützabschnitts einer erfindungsgemäßen Bremszange und der Unterseite eines erfindungsgemäßen alternativen Bremsbelags.
- Fig. 14: zeigt eine Teilschnittansicht durch einen Bremszylinder mit einem Verschlusselelement der Bremszange von Fig. 1.
- Fig. 15: zeigt einen Schnitt durch das Verschlußelement der Bremszange von Fig. 14,
- Fig. 16: zeigt eine Seitenansicht des Verschlußelements von Fig. 15.

### Folgende Bezugszeichen werden verwendet:

- 10: Verschlusselement
- 11: Aussparung
- 12: Außenwandung
- 13: Nut
- 14: Abschnitt
- 15: Abschnitt
- 21: Sicherungselement
- 22: Dichtung
- 27: Bremskolben
- 29: Montageöffnung (für Bremsbeläge)
- 30: Gehäuse
- 301: Aussparung
- 302: Schulter
- 303: Anschraubauge
- 304: Anschraubauge
- 31: Bremsbelagabstützvorrichtung
- 31A: Bolzen
- 311A: Hauptabschnitt
- 312A: Kopfabschnitt
- 31B: Bolzen
- 32: Vorspanneinrichtung
- 33: Widerlagerfläche
- 34: Bohrung
- 35: Aufweitung
- 36: Bremszylinder
- 37: Nut
- 371: Schulter
- 38: Wartungsöffnung
- 39: Drehrichtung der Bremsscheibe (Vorfährtsfahrt)
- 139: Aussparung
- 139A; 139B: Sichtfenster
- 40; 40': Bremsbelag
- 41: Aussparung (halbrund)
- 41': Aussparung (Abschrägung)
- 141: Aussparung (asymmetrisch)
- 42: Oberseite
- 43: Vorderseite
- 44: Arm
- 45: Aufnahmeöffnung
- 46: Unterseite
- 47: Reibbelag
- 48: Reibbelag
- 49; 49A; 49B: Vorsprung
- 50: Bremsbelagsicherungsvorrichtung
- 51; 51': Sicherungsbolzen
- 511; 511': Nut
- 512: Nut
- 513: Kopfabschnitt
- 514: Hauptabschnitt
- 515: Kopfabschnitt
- 517': Bohrung
- 52; 52': Bügel
- 521; 521': Armabschnitt
- 522; 522': Bogenabschnitt
- 523; 523': Betätigungsabschnitt
- 524: Armabschnitt
- 525: Bogenabschnitt
- 526: Betätigungsabschnitt
- 527': Eingriffabschnitt
- 53: Nocke
- 60: Gabelfuss
- 61: Gabelaufnahme
- 62: Achsaufnahme
- 63: Aufnahme
- 64: Aufnahme

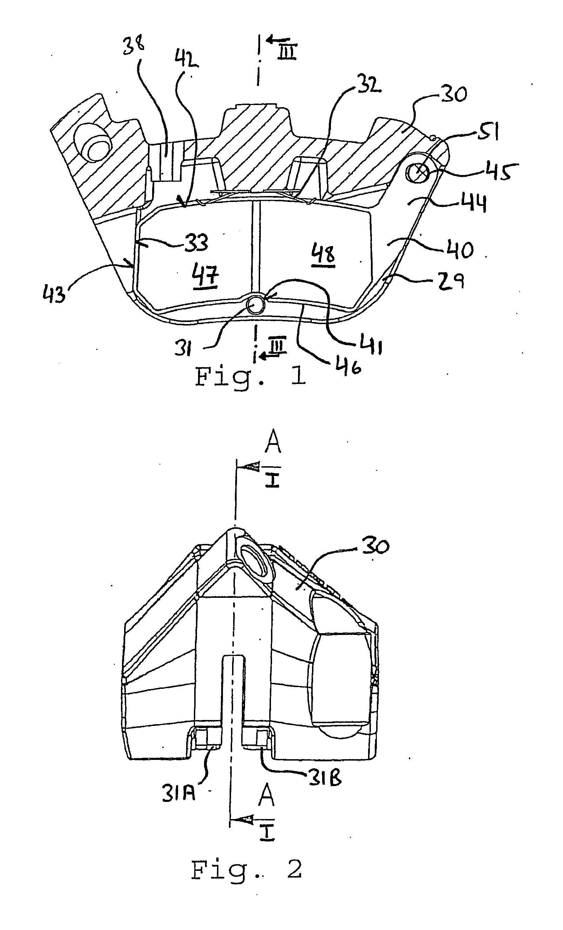

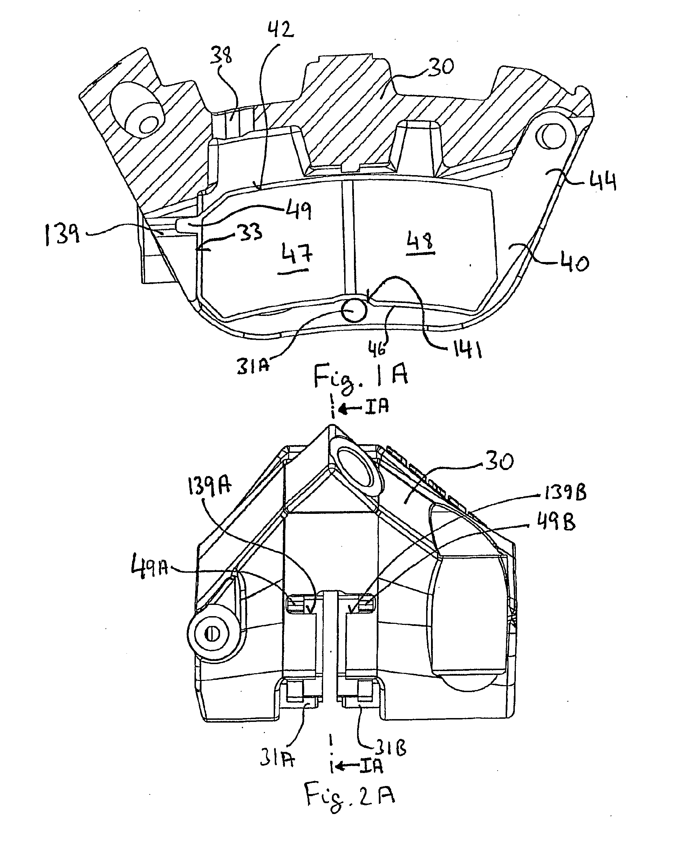

Figur 1 zeigt einen Schnitt durch eine erfindungsgemäße Bremszange entlang der Linie I-I von Figur 2.

Die erfindungsgemäße Bremszange umfaßt ein Gehäuse 30, in dem ein Bremsbelag 40 aufgenommen ist. Das Gehäuse 30 weist auf seiner in Figur 1 linken Seite eine Widerlagerfläche 33 auf, an der sich der Bremsbelag 40 mit seiner Vorderseite 43 abstützt. Die Widerlagerfläche 33 und die Vorderseite 43 des Bremsbelags 40 sind derart ausgebildet, dass eine flächige Anlage des Bremsbelags 40 an der Widerlagerfläche 33 erfolgt.

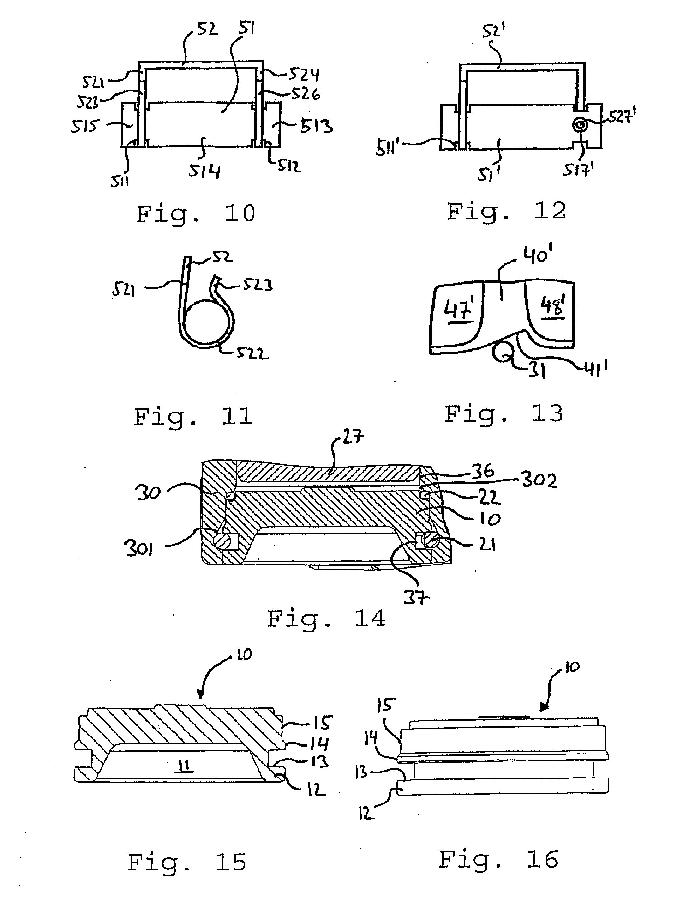

Der Bremsbelag 40 weist einen Arm 44 mit einer Aufnahmeöffnung 45 auf, in der ein Bolzen 51 einer in den Figuren 10 und 11 detailliert dargestellten Bremsbelagsicherungsvorrichtung 50 angeordnet ist und den Bremsbelag 40 in dem Gehäuse 30 sichert. Die Widerlagerfläche 33 ist derart geneigt, dass sich der Bremsbelag 40 um die Aufnahmeöffnung 45 nach unten aus dem Gehäuse 30 drehen könnte. Um den Bremsbelag 40 gegen ein derartiges Herausdrehen zu sichern, ist an dem Gehäuse 30 im unteren Bereich eine Bremsbelagabstützvorrichtung 31 vorgesehen, die den Bremsbelag 40 an seiner Unterseite 46 abstützt. In der Unterseite 46 ist eine Aussparung 41 vorgesehen, in der die Bremsbelagabstützvorrichtung 31 angreift.

Um den Bremsbelag 40 in eine definierte Position in dem Gehäuse 30 vorzuspannen, ist eine Vorspannvorrichtung 32 vorgesehen, die an der Oberseite 42 des Bremsbelags 40 angreift. Die Vorspannvorrichtung 32 drückt den Bremsbelag 40 mit der bogenförmigen Aussparung 41 gegen die Bremsbelagabstützvorrichtung 31. Wegen der bogenförmigen Ausbildung der Aussparung 41 wird der Bremsbelag 40 mit seiner Vorderseite 43 gegen die Widerlagerfläche 33 gedrückt.

Gemäß einer nicht dargestellten alternativen Ausführung der Erfindung könnte die Vorspannvorrichtung auch auf der Widerlagerfläche 33 gegenüberliegenden Seite des Gehäuses 30 vorgesehen werden und den Bremsbelag 40 in Richtung der Widerlagerfläche 33 vorspannen. Durch die schräge Anordnung der Widerlagerfläche 33 wird der Bremsbelag 40 gegen die Bremsbelagabstützvorrichtung 31 vorgespannt.

Gemäß einer weiteren alternativen Vorrichtung kann auch eine Vorspannvorrichtung vorgesehen sein, die den Bremsbelag 40 mit einer Kraftkomponente gegen die Bremsbelagabstützvorrichtung 31 und mit einer weiteren Kraftkomponente gegen die Widerlagerfläche 33 vorspannt.

Der Bolzen 51 ist in der Aufnahmeöffnung 45 des Bremsbelags 40 mit Spiel angeordnet, um einen Ausgleich für die Wärmeausdehnung des Bremsbelags 40 bei den beim Bremsen zum Teil erheblichen Temperaturen zu schaffen. Das Spiel ist insbesondere wichtig, um ein Festsetzen des Bremsbelags beim Bremsen zu vermeiden. Fig. 1 zeigt die erfindungsgemäße Bremszange im kalten Zustand, d.h. das Spiel in der Aufnahmeöffnung 45 ist im wesentlichen links von dem Bolzen 51 ausgebildet. Beim Erwärmen des Bremsbelags 40 dehnt sich der Bremsbelag 40 aus und kann in Fig. 1 nach rechts ausweichen. Dabei verschiebt sich die Aussparung 41 auf der Bremsbelagabstützvorrichtung 31 derart, dass wegen der halbrunden Ausgestaltung der Aussparung 51 der Bremsbelag 40 auch etwas nach oben gegen die Vorspannvorrichtung 32 gedrückt wird. Durch die Vorspannvorrichtung 32 wird der Bremsbelag 40 gleichzeitig infolge der halbrunden Ausgestaltung der Aussparung 41 nach links gegen die Widerlagerfläche 33 gedrückt.

Der Bremsbelag 40 weist zwei Reibbeläge 47, 48 auf, die auf bekannte Weise beim Bremsvorgang gegen eine in dem Gehäuse 30 aufgenommene Bremsscheibe gedrückt werden. Das Gehäuse 30 weist eine Wartungsöffnung 38 auf, um den Verschleiß der Reibbeläge einfacher erkennen zu können bzw. um die Anlagefläche der Reibbeläge sehen und ggf. reinigen zu können.

Die dargestellte Bremszange weist zwei spiegelbildlich aufgebaute Bremsbeläge 40 auf, die beim Bremsen von beiden Seiten auf die in das Gehäuse 30 aufgenommene Bremsscheibe einwirken. Wie in Fig. 2 dargestellt, umfaßt die Bremsbelagabstützvorrichtung 31 zwei gegenüberliegende Bolzen 31A, 31B zur Abstützung jeweils eines Bremsbelags 40.

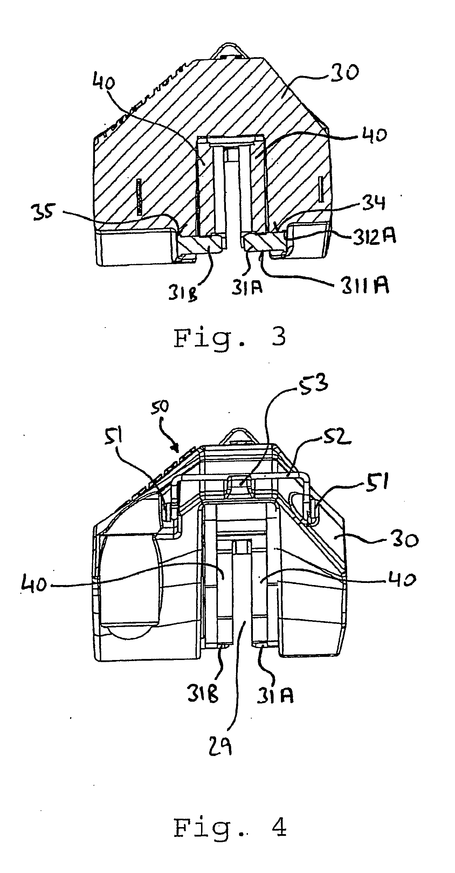

Fig. 3 zeigt einen Schnitt durch die Bremszange von Fig. 1 entlang der Linie III-III von Fig. 1. In Fig. 3 ist die Anordnung der Bolzen 31A, 31B in dem Gehäuse 30 erkennbar. Die Bolzen 31A und 31B sind spiegelbildlich aufgebaut. Der Aufbau wird beispielhaft an dem Bolzen 31A erläutert. Der Bolzen 31A weist einen Hauptabschnitt 311A und einen Kopfabschnitt 312A auf, der einen etwas größeren Durchmesser aufweist. Der Bolzen 31A ist in einer Bohrung 34 aufgenommen, die im Bereich des Kopfabschnitts 312A eine Aufweitung 35 aufweist. Der Bolzen 31A wird in die Bohrung 34 mit der Preßpassung eingesetzt und Material des Gehäuses 30 wird zur Sicherung des Bolzens 31A über den Kopfabschnitt 312A umgeformt.

Zur Montage der Bremsbeläge 40 in das Gehäuse werden die Bremsbeläge 40 in Fig. 1 von rechts in die Bremszange gesteckt. Dabei wird der Bremsbelag 40 durch die Bremsbelagabstützvorrichtung 31 nach oben gegen die Vorspannvorrichtung 32 gedrückt. Sobald der Bremsbelag 40 seine Endlage erreicht hat, wird er durch die Vorspannvorrichtung 32 in die halbrunde Aussparung 41 des Belags 40 gegen die Bremsbelagabstützvorrichtung 31 gedrückt. Es erfolgt ein mit einem Geräusch verbundenes "Einschnappen" oder "Einrasten" des Bremsbelags 40, und damit eine deutliche Rückmeldung an den Benutzer. Danach werden die Beläge 40 durch den Bolzen 51 abgesteckt. Zur Sicherung des Bolzens 51 wird ein Bügel 52 an den Enden des Bolzens 51 vorgesehenen Nuten 511, 512 angeordnet. Der Bügel 52 wird anschließend über die an dem Gehäuse 30 ausgebildete Nocke 53 geschoben und rastet dort ein. Dadurch entsteht eine doppelte Absicherung des Bolzens, die in der Doppelfunktion des Bügels 52 verwirklicht wird.

Fig. 4 zeigt eine Hinteransicht der Bremszange von Fig. 1. Durch die Montageöffnung 29 sind die Bremsbeläge 40 in das Gehäuse 30 eingebracht. Oberhalb der Montageöffnung 29 ist die Nocke 53 der Bremsbelagsicherungsvorrichtung 50 vorgesehen. Die Bremsbelagsicherungsvorrichtung 50 umfaßt den Bolzen 51, der mit dem Bügel 52 gesichert ist und in den Figuren 10 und 11 detailliert beschrieben ist.

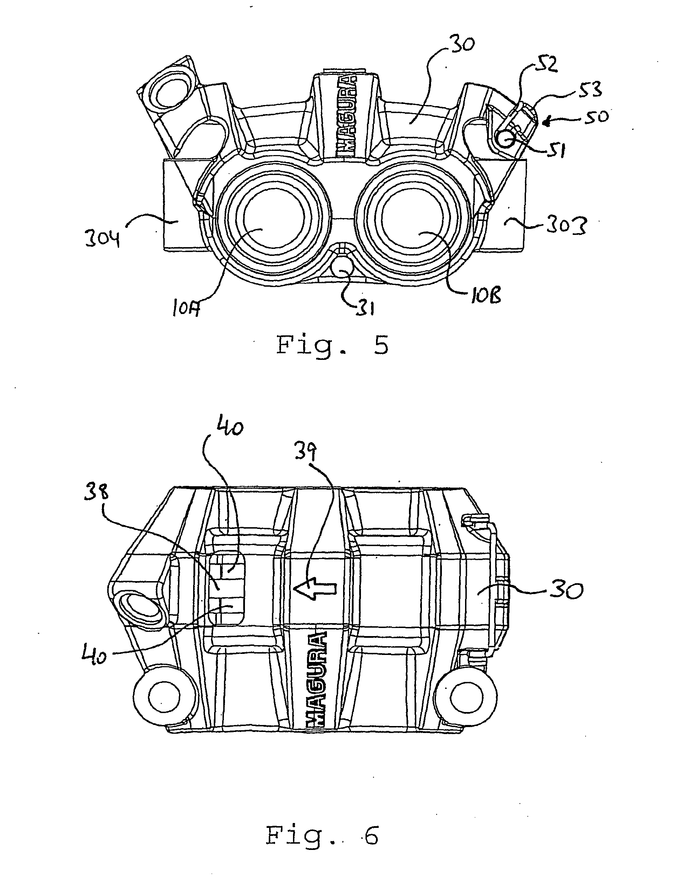

Fig. 5 zeigt eine Seitenansicht der Bremszange von Fig. 1. Die Bremszange umfaßt zwei Bremskolbenpaare, die auf bekannte Weise aufgebaut sind. Die Bremszylinder weisen ein offenes Ende auf, das mit jeweils einem Verschlußelement 10A bzw. 10B verschlossen ist. Die Ausbildung des Verschlußelements ist in den Figuren 14 bis 16 detailliert beschrieben.

Fig. 6 zeigt eine Ansicht der Bremszange von Fig. 1 von oben. Mit dem Pfeil 39 ist die Drehrichtung der Bremsscheibe bei Vorwärtsfahrt angegeben. Durch die Wartungsöffnung 38 ist der Verschleiß der Reibbeläge einfach zu erkennen und können die Anlagefläche der Beläge gesehen und gereinigt werden.

Die Figuren 1A und 2A zeigen eine weitere erfindungsgemäße Bremszange, die im wesentlichen der in den Figuren 1 bis 6 gezeigten Bremszange entspricht. Daher werden im wesentlichen die gleichen Bezugszeichen für gleiche Merkmale verwendet, wird auf die obige Beschreibung verweisen, und es werden im folgenden im wesentlichen nur die Unterschiede beschrieben.

Übersichtshalber wurde die Feder 32 in Fig. 1A nicht dargestellt.

Die Aussparung 141 ist asymmetrisch ausgebildet. Diese Ausbildung hat den Vorteil, dass der Belag leichter ausgetauscht werden kann.

An der linken Seite weist der Belag 40 einen Vorsprung 49 auf, der in eine Aussparung 139 in dem Gehäuse eingreift. Vorzugsweise liegt der Vorsprung 49 bzw. 49A, 49B nicht an dem Gehäuse 30 an, sondern hat zumindest einen geringen Abstand. Der Vorsprung 49 dient als Sicherungselement für den ungewöhnlichen Fall, dass sich infolge einer extremen Belastung oder Ausnahmesituation das Abstützelement 31 (bei dieser Ausführung der einseitig gelagerte Bolzen 31A bzw. der Bolzen 31B) löst. In diesem Fall liegt der Vorsprung 49 bzw. 49A, 49B an dem Gehäuse 30 in der Aussparung 139 an und ein Herunterklappen des Bremsbelags wird sicher verhindert.

Die Aussparung 139 ist bei der gezeigten Ausführung durchgehend ausgebildet, derart, dass das Gehäuse 30 ein Sichtfenster 139A und ein Sichtfenster 139B aufweist, wie in Fig. 2A gezeigt. Die Sichtfenster erfüllen somit bevorzugt die Doppelfunktion, dass sich einerseits die Vorsprünge 49A, 49B der beiden Bremsbeläge 40 beispielsweise bei einem Ausfall zumindest eines Bolzens 31A; 31B an dem Sichtfenster abstützen können, und sich andererseits der Verschleiss der Reibbeläge 47, 48 durch die Sichtfenster verfolgen läßt. Beispielsweise kann, wie in Fig. 2A gezeigt, durch das Sichtfenster sowohl der Vorsprung als auch der Reibbelag sichtbar sein. Alternativ oder zusätzlich kann das Sichtfenster eine Markierung aufweisen, die den maximal zulässigen Verschleiß der Reibbeläge bzw. die verbleibende Stärke der Reibbeläge 47, 48 anzeigt. Dazu kann beispielsweise eine Kante in der Höhe des Trägerblechs vorgesehen werden. Bei dieser Ausführung kann auch auf die Wartungsöffnung 38 verzichtet werden, weil die Sichtfenster die Funktion der Wartungsöffnung 38 erfüllen können.

Zusätzlich oder alternativ zu dem Vorsprung 49 und der Aussparung 139 können gemäß nicht dargestellten Ausführungen der Erfindung entsprechende Sicherungsmittel vorgesehen werden.
Beispielsweise kann der Belag in der Mitte eingehängt werden, beispielsweise in der Feder bzw. der Wartungsöffnung. Dazu kann der Belag geeignet ausgebildete Vorsprünge aufweisen. Alternativ oder zusätzlich kann auch ein Bolzen oberhalb bzw. vorzugsweise außerhalb des Bereichs in den die nicht dargestellte Bremsscheibe eingreift vorgesehen sein, an den der Bremsbelag mit einem entsprechend ausgebildeten Vorsprung angreift. Bei dieser Ausführung können die Bolzen 31A und 31B auch weggelassen werden, und der Belag kann gegen den Bolzen gespannt werden. Dieser Bolzen kann beispielsweise auch zur Aufhängung bzw. Befestigung der Feder dienen.

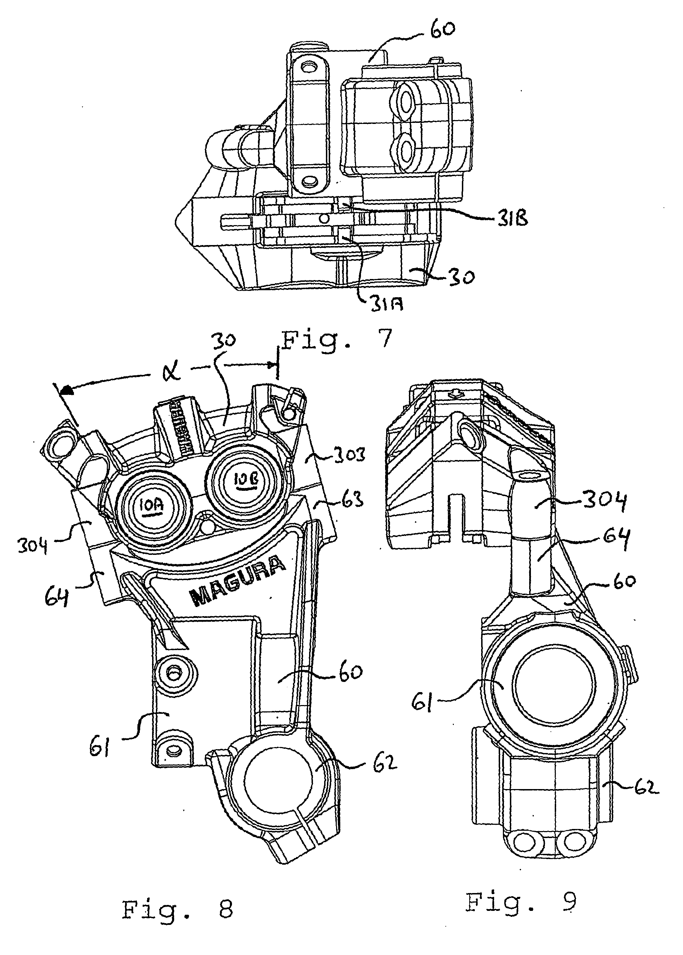

Die Figuren 7 bis 9 zeigen die Bremszange von Fig. 1 in Kombination mit einem Gabelfuß. Fig. 7 zeigt die Kombination von unten, Fig. 8 von der Seite und Fig. 9 von vorne. Der Gabelfuß 60 umfaßt eine Gabelaufnahme 61 und eine Achsaufnahme 62, die auf bekannte Weise ausgebildet sind. Die Bremszange ist mit dem Gabelfuß 60 über zwei Bolzen- und/oder Schraubenverbindungen verbunden, die an der Vorder- und Rückseite des Gehäuses angreifen. Das Gehäuse 30 weist an der Vorderseite ein Anschraubauge 304 und an der Rückseite ein entsprechendes Anschraubauge 303 auf. Der Gabelfuß weist entsprechende Aufnahmen 63 und 64 auf, in denen nicht dargestellte Bolzen oder Gewinde vorgesehen sind, die in die Anschraubaugen 303 bzw. 304 auf bekannte Weise angreifen. Die Anschraubaugen 303 und 304 sind in Umfangsrichtung der Bremsscheibe gesehen an gegenüberliegenden Enden der Bremszange 30 vorgesehen. Da die Anschraubaugen 303 und 304 die in dem Gehäuse der Bremszange vorgesehenen Bremszylinder einschließen, ist eine optimale Verbindungssteifigkeit gegeben.

Die Konstruktion des Gabelfusses 60 ist derart, dass die Bremszange in einem Winkel α = ungefähr 0 bis ungefähr 45°, vorzugsweise α = ungefähr 10 bis ungefähr 30° und insbesondere vorzugsweise α = ungefähr 15° nach oben positioniert werden kann. Die nach oben gerichtete Konstruktion ist notwendig, um auf der Unterseite der Gabel keine Störkontur zu erzeugen, die tiefer als der Gabelfuß ist. Das ist insbesondere bei Moto-Cross-Motorrädern sehr wichtig, bei denen die Bremse ansonsten Kontakt mit Hindernissen am Boden haben könnte.

Fig. 10 zeigt eine Detailansicht des Bügels 52 und des Bolzens 51 der Bremsbelagsicherungsvorrichtung 50 der Bremszange von Fig. 1 aus einer Richtung entsprechend Fig. 4. Der Bolzen 51 umfaßt einen Hauptabschnitt 514 und zwei Kopfabschnitte 515 bzw. 513, die durch jeweils eine Nut 511 bzw. 512 von dem Hauptabschnitt 514 getrennt sind. Der Bügel 52 umfaßt an seinen Seiten jeweils einen Armabschnitt 521 bzw. 524, die ähnlich wie ein Federsplint ausgebildet sind. Die Armabschnitte 521 bzw. 524 umfassen jeweils einen Bogenabschnitt 522 bzw. 525, der in einen Betätigungsabschnitt 523 bzw. 526 übergeht.

Zur Sicherung der Bremsbeläge in dem Gehäuse wird der Bolzen 51 in das Gehäuse 30 durch die Aufnahmeöffnungen 45 der Bremsbeläge 40 eingesteckt und mit dem Bügel 52 gesichert (siehe Figuren 1 und 4). Dazu werden die Armabschnitte 521 bzw. 524 in die Nuten 511, 512 eingerastet und der Bügel 52 über die Nocke 53 gedreht.

Fig. 12 zeigt eine alternative Ausbildung der Bremsbelagsicherungsvorrichtung 50. Der Bügel 52' ist auf seiner in Fig. 12 linken Seite entsprechend der Figuren 10 und 11 ausgebildet, auf deren Beschreibung verwiesen wird. Auf seiner in Fig. 12 rechten Seite weist der Bügel 52 einen Eingriffsabschnitt 527 auf, der in eine Bohrung 517 in dem Bolzen 51' eingehängt wird. Zur Montage des Sicherungsbügels 52' wird der Bügel 52' mit dem Eingriffabschnitt 527 in die Bohrung 517 eingehängt und über der Nocke 53 angeordnet. Anschließend wird der Armabschnitt 521' in die Nut 511' eingerastet.

Fig. 13 zeigt eine Alternative eines erfindungsgemäßen Bremsbelags 40'. Der Bremsbelag 40' ist im wesentlichen wie der in Fig. 1 gezeigte Bremsbelag 40 ausgebildet, auf dessen Beschreibung verwiesen wird. Im Folgenden werden nur die Unterschiede beschrieben.

Der Bremsbelag 40' weist eine anders ausgebildete Aussparung 41' auf. Die Aussparung 41' weist eine Abschrägung auf, die derart geneigt ist, dass der Bremsbelag 40' durch die Vorspannvorrichtung in Richtung der Widerlagerfläche 33 vorgespannt wird. Der Winkel der Abschrägung der Aussparung 41' sollte nicht zu steil gewählt werden, um zu vermeiden, dass der Belag klemmt. Er sollte auch nicht zu flach gewählt werden, um eine hohe Reibkraft zu vermeiden, so dass keine Vorspannung folgt. Es liegt im Können des Fachmanns, die geeignete Neigung zu bestimmen. Die Aussparung 41' kann krummlinig oder gradlinig verlaufen. Es wird derzeit angenommen, dass ein Winkel in dem Bereich von 30 bis 45° am besten geeignet ist. Anhand von Versuchen wird herausfindbar sein, ob größere oder kleinere Winkel ebenfalls geeignet sind.

Die Figuren 14 bis 16 zeigen den Aufbau des Verschlusselements für die offenen Enden der Bremszylinder.

Fig. 14 zeigt einen Teilquerschnitt durch ein Gehäuse einer erfindungsgemäßen Bremszange durch einen Bremszylinder. Das Gehäuse 30 weist zwei Bremszylinder 36 auf, in denen jeweils ein Bremskolben 27 angeordnet ist (nur einer ist jeweils dargestellt). Die Bremskolben 27 sind auf gegenüberliegenden Seiten der Bremsscheibe angeordnet und werden auf bekannte Weise mit Druck beim Bremsen beaufschlagt, um die Bremsbeläge gegen die Bremsscheibe zu drücken. In den Zylinderwandungen sind Nuten vorgesehen, in denen Vierkantdichtungen aufgenommen sind, die den Bremszylinder 36 abdichten und eine Rückstellung der Bremskolben nach dem Bremsen auf bekannte Weise bewirken.

Das Gehäuse der Bremszange ist vorzugsweise ein Schmiedeteil. Die Bremszylinder 35 und 36 werden durch spanende Bearbeitung ausgebildet. Dabei bleibt ein Zylinder in Folge der spanenden Bearbeitung nach außen offen. Nach dem Einsetzen der Bremskolben wird der Bremszylinder durch das Verschlußelement 10, 10A, 10B verschlossen. Das Verschlußelement 10 weist eine Nut 13 auf, in der ein Sicherungselement 21 angeordnet ist. Das Gehäuse 30 weist eine Aussparung 301 auf, in die das Sicherungselement 21 zum Teil eingreift. Das Sicherungelement 21 sichert das Verschlußelement 10 in dem Gehäuse 30, insbesondere beim Bremsen, wenn in dem Zylinder 35 ein Druck durch das Bremsfluid aufgebaut wird, der das Verschlußelement 10 in Fig. 14 nach unten drückt. In dem Gehäuse 30 ist desweiteren eine Schulter 302 ausgebildet, an der sich das Verschlußelement 10 über eine Dichtung 22 abstützt. Die Dichtung 22 dichtet den Druckraum des Bremszylinders 36 nach außen ab.

Fig. 15 zeigt eine Schnittansicht entsprechend Fig. 14 von dem Verschlußelement 10. Das Verschlußelement 10 weist eine Aussparung 11 an seiner Außenseite auf. Die Aussparung dient zur Gewichtsreduzierung und kann alternativ auch anders ausgebildet werden oder weggelassen werden. Gegenüber bekannten Verschlußelementen hat sie den Vorteil, dass sie optisch gefälliger aussieht und keine Verletzungsgefahr wegen der nicht notwendigen Eingriffsabschnitte für Montagewerkzeuge aufweist. Das Verschlußelement 10 weist eine Nut 13 zur Aufnahme des Sicherungselements 21 auf, die zwischen einer Außenwandung 12 und einem Abschnitt 14 ausgebildet ist. Der Außendurchmesser der Außenwandung 12 entspricht dem Innendurchmesser der Öffnung in dem Gehäuse 30, in die das Verschlußelement 10 eingesetzt wird. Daher ist es nicht möglich, von außen das Verschlußelement 10 zu entfernen, weil das Sicherungselement 21 von außen nicht zugänglich ist. Der Abschnitt 14 entspricht dem Außendurchmesser im wesentlichen dem Außendurchmesser der Außenwandung 12. Der Außendurchmesser des Abschnitts 15 ist geringfügig kleiner als der Außendurchmesser des Abschnitts 14.

Der Außendurchmesser des Abschnitts 15 entspricht im wesentlichen dem Innendurchmesser der Öffnung in dem Gehäuse 30, an dem das Verschlußelement 10 nach der Montage anliegt. Daher ist es nach der Montage des Verschlußelements 10 auch nicht möglich, das Sicherungselement 21 von innen zu betätigen. Somit kann das Verschlußelement 10 nach erfolgter Montage nicht aus der Bremszange entfernt werden. Da die Kolben 25 und 26 auf eine Betriebsdauer ausgelegt ist, die wesentlich größer als die Betriebsdauer des Fahrzeugs ist, besteht auch kein Bedarf, das Verschlußelement 10 nach erfolgter Montage wieder zu entfernen. Das Verschlußelement 10 weist des weiteren eine Aussparung 16 zur Aufnahme des Dichtungselements 22 auf.

Fig. 16 zeigt eine Seitenansicht des Verschlußelements 10 von Fig. 14. Die Beschreibung von Fig. 16 entspricht im wesentlichen der von Fig. 15 und wird hier nicht wiederholt.

Zur Montage des Verschlußelements 10 wird das Verschlußelement 10 zusammen mit dem Sprengring 21 über eine Trichtervorrichtung in eine Hülse eingebracht, deren Innendurchmesser dem Innendurchmesser der Montageöffnung für die Bremskolben entspricht. Die Hülse wird auf das Gehäuse 30 gesetzt und das Verschlußelement 10 wird mit dem Sicherungselement 21 in die Montageöffnung für die Bremskolben geschoben, bis das Verschlußelement 10 gegen die Dichtung 22 stößt. Gleichzeitig gelangt das Sicherungselement 21 in dem Bereich der Aussparung 301. Das Sicherungselement 21 ist ein Sprengring, der vorgespannt ist und in die Aussparung 301 hineinspringt. Die Hälfte des Sicherungselements 21 ist in der Aussparung 301 und die andere Hälfte in der Nut 13 des Sicherungsverschlußelements 10 angeordnet. Durch das Sicherungselement 21 ist das Verschlußelement 10 in der Montageöffnung 50 gesichert.

## Patentansprüche

1. Bremszange für eine Scheibenbremse, insbesondere für Motorräder und/oder Fahrräder, mit
einem Gehäuse (30) zur Aufnahme von Bremsbelägen (40), die beim Bremsen an eine Bremsscheibe angreifen, wobei das Gehäuse eine widerlagerfläche (33) zur Anlage der Bremsbeläge beim Bremsen in Vorwärtsfahrtrichtung und eine der Widerlagerfläche (33) gegenüberliegende Montageöffnung (29) aufweist, durch die die Bremsbeläge (40) in das Gehäuse (30) einsetzbar sind,
**dadurch gekennzeichnet, dass** das Gehäuse (30) eine Aussparung (139) und/oder ein Sichtfenster (139A, 139B) aufweist, in die bzw. das ein Vorsprung (49, 49A, 49B) von einem in das Gehäuse (30) eingesetzten Bremsbelag (40) eingreift.

2. Bremszange nach Anspruch 1, **dadurch gekennzeichnet, dass** das zumindest eine Sichtfenster derart ausgebildet ist, dass der Verschleiß der Reibbeläge (47, 48) eines in das Gehäuse (30) eingesetzten Bremsbelags (40) beobachtbar ist.

3. Bremszange nach einem der vorhergehenden Ansprüche mit einer Bremsbelagsicherungsvorrichtung (50) zur Sicherung der Bremsbeläge in dem Gehäuse (30) an der der Widerlagerfläche (33) gegenüberliegenden Seite, und/oder
einer Bremsbelagabstützeinrichtung (31) zur Abstützung der Bremsbeläge (40) zwischen der Widerlagerfläche (33) und der Bremsbelagsicherungsvorrichtung (50).

4. Bremszange nach einem der vorhergehenden Ansprüche mit
einer Vorspanneinrichtung (32), die derart ausgebildet ist, dass sie einen in das Gehäuse (30) eingesetzten Bremsbelag (40) in eine definierte Position vorspannt.

5. Bremszange nach Anspruch 4, **dadurch gekennzeichnet, dass** die Vorspanneinrichtung (32) derart ausgebildet ist, dass sie einen in die Bremszange eingesetzten Bremsbelag (40) gegen die Widerlagerfläche (33) und/oder die Bremsbelagabstützeinrichtung (31) vorspannt, und/oder
**dadurch gekennzeichnet, dass** die Vorspanneinrichtung (32) derart ausgebildet ist, dass sie auf einen in die Bremszange eingesetzten Bremsbelag (40) eine Kraft ausübt, die im wesentlichen in Richtung der Bremsbelagabstützeinrichtung (31) gerichtet ist, und/oder
**dadurch gekennzeichnet, dass** die Vorspanneinrichtung (32) mindestens eine Federeinrichtung umfaßt, die an der Oberseite (42) von einem in das Gehäuse (30) eingesetzten Bremsbelag (40) angreift, und/oder
**dadurch gekennzeichnet, dass** die Vorspanneinrichtung (32) eine Blattfeder umfaßt, die an der Oberseite (42) von einem in das Gehäuse (30) eingesetzten Bremsbelag (40) angreift, und/oder
**dadurch gekennzeichnet, dass** die Vorspanneinrichtung (32) mehrere Blattfedern umfaßt, die jeweils an einen in das Gehäuse (30) eingesetzten Bremsbelag (40) angreifen, und/oder
**dadurch gekennzeichnet, dass** die Vorspanneinrichtung (32) in Umfangsrichtung einer in dem Gehäuse aufgenommenen Bremsscheibe ungefähr in der Mitte zwischen der Widerlagerfläche (33) und der Bremsbelagsicherungsvorrichtung (50) angeordnet ist, und/oder
**dadurch gekennzeichnet, dass** die Bremsbelagabstützeinrichtung (31) derart ausgebildet ist, dass ein in das Gehäuse eingesetzter Bremsbelag (40) durch die durch Vorspanneinrichtung (32) auf den Bremsbelag (40) ausgeübte Kraft in Richtung der Widerlagerfläche (33) vorgespannt wird.

6. Bremszange nach Anspruch 4 oder 5, **dadurch gekennzeichnet, dass** die Vorspanneinrichtung derart ausgebildet ist, dass sie auf einen in die Bremszange eingesetzten Bremsbelag eine Kraft ausübt, die im wesentlichen in Richtung der Widerlagerfläche gerichtet ist, und/oder
**dadurch gekennzeichnet, dass** die Vorspanneinrichtung mindestens eine Federeinrichtung umfaßt, die auf der der Widerlagerfläche gegenüberliegenden Seite eines in die Bremszange eingesetzten Bremsbelags an dem Bremsbelag angreift, und/oder
**dadurch gekennzeichnet, dass** die Widerlagerfläche derart geneigt ist, dass ein gegen die Widerlagerfläche vorgespannter Bremsbelag gegen die Bremsbelagabstützeinrichtung vorgespannt wird, und/oder
**dadurch gekennzeichnet, dass** die Vorspanneinrichtung derart ausgebildet ist, dass sie auf einen in die Bremszange eingesetzten Bremsbelag eine Kraft ausübt, die eine erste Kraftkomponente, die im wesentlichen in Richtung der Bremsbelagabstützeinrichtung gerichtet ist, und eine zweite Kraftkomponente aufweist, die im wesentlichen in Richtung der Widerlagerfläche gerichtet ist.

7. Bremszange nach Anspruch 6, **dadurch gekennzeichnet, dass** die erste Kraftkomponente ungefähr das 0,1 bis ungefähr das 10-fache, vorzugsweise ungefähr das 0,5 bis ungefähr das 5-fache und vorzugsweise ungefähr das 2-fache der zweiten Kraftkomponente beträgt.

8. Bremszange nach einem der vorhergehenden Ansprüche,
**dadurch gekennzeichnet, dass** die Vorspanneinrichtung derart ausgebildet ist, dass sie bei Betätigung der Bremse deaktiviert wird,
wobei die Bremszange vorzugsweise eine hydraulische Bremsbetätigung umfaßt, und die Vorspanneinrichtung vorzugsweise derart ausgebildet ist, dass sie durch den bei der Betätigung der Bremse aufgebauten hydraulischen Druck deaktiviert wird.

9. Bremszange nach einem der vorhergehenden Ansprüche, **dadurch gekennzeichnet, dass** die Bremsbelagabstützeinrichtung (31) mehrere Bolzen (31A, 31B) umfasst, die jeweils einen in das Gehäuse (30) eingesetzten Bremsbelag (40) abstützen, und/oder
**dadurch gekennzeichnet, dass** die Bremsbelagabstützeinrichtung mehrere Vorsprünge umfasst, die jeweils einen in das Gehäuse eingesetzten Bremsbelag abstützen, wobei vorzugsweise die Vorsprünge einstückig mit dem Gehäuse ausgebildet sind, und/oder
**dadurch gekennzeichnet, dass** die Bremsbelagabstützeinrichtung (31) in Umfangsrichtung einer in dem Gehäuse aufgenommenen Bremsscheibe ungefähr in der Mitte zwischen der Widerlagerfläche (33) und der Bremsbelagsicherungsvorrichtung (50) angeordnet ist, und/oder
**dadurch gekennzeichnet, dass** die Bremsbelagabstützeinrichtung (31) und die Vorspanneinrichtung (32) in Umfangsrichtung einer in dem Gehäuse aufgenommenen Bremsscheibe im wesentlichen ungefähr auf der gleichen Höhe angeordnet sind.

10. Bremszange nach einem der vorhergehenden Ansprüche, **dadurch gekennzeichnet, dass** das Gehäuse (30) ein Schmiedeteil ist, das vorzugweise einteilig ausgebildet ist, und/oder
**dadurch gekennzeichnet, dass** das Gehäuse ein Fräs- und/oder Gußteil ist, das einteilig, zweiteilig oder mehrteilig ausgebildet ist.

11. Bremsbelag für eine Bremszange nach einem der vorhergehenden Ansprüche oder Bremzange nach einem der vorhergehenden Ansprüche mit mindestens einem Bremsbelag, **dadurch gekennzeichnet, dass** der Bremsbelag einen Vorsprung (49) zum Eingriff in eine Aussparung (139) in dem Gehäuse einer Bremszange aufweist.

12. Bremsbelag oder Bremszange nach Anspruch 11, **dadurch gekennzeichnet, dass** der Vorsprung (49) an einer Seite des Bremsbelags angeordnet ist, und/oder
**dadurch gekennzeichnet, dass** der Vorsprung (49) im wesentlichen mittig vorzugsweise im oberen Bereich des Bremsbelags angeordnet ist.

13. Bremsbelag für eine Bremszange nach Anspruch 11 oder 12 mit einer Aussparung (41; 41') zur Abstützung an der Bremsbelagabstützvorrichtung (31).

14. Bremsbelag nach Anspruch 13, **dadurch gekennzeichnet, dass** die Aussparung (41) derart ausgebildet ist, dass der in das Gehäuse (30) eingesetzte Bremsbelag (40) mittels der durch mindestens eine Vorspanneinrichtung (32) auf den Bremsbelag (40) ausgeübte Kraft in Richtung der Widerlagerfläche (33) vorgespannt wird, und/oder
**dadurch gekennzeichnet, dass** die Aussparung (41) halbrundförmig ausgebildet ist, und/oder
**dadurch gekennzeichnet, dass** die Aussparung (41') eine Abschrägung aufweist, die derart ausgebildet ist, dass der in das Gehäuse (30) eingesetzte Bremsbelag (40') mittels der durch die mindestens eine Vorspanneinrichtung (32) auf den Bremsbelag (40') ausgeübte Kraft in Richtung der Widerlagerfläche (33) vorgespannt wird,
wobei vorzugsweise die Abschrägung geradlinig ausgebildet ist und vorzugsweise einen Winkel von ungefähr 15 bis ungefähr 45 Grad, weiter vorzugsweise von ungefähr 30 Grad zur Umfangsrichtung der Bremsscheibe aufweist, oder
wobei vorzugsweise die Abschrägung krummlinig ausgebildet ist und vorzugsweise eine Neigung in einem Winkelbereich zwischen ungefähr 15 bis ungefähr 45 Grad, weiter vorzugsweise eine Neigung von ungefähr 30 Grad zur Umfangsrichtung der Bremsscheibe aufweist.

15. Bremszange nach einem der Ansprüche 1 bis 10 mit mehreren, vorzugsweise zwei Bremsbelägen nach einem der Ansprüche 11 bis 14.
